(19) Europäisches Patentamt
European Patent Office
Office européen des brevets

(11) **EP 2 226 517 A1**

(12) **EUROPÄISCHE PATENTANMELDUNG**

(43) Veröffentlichungstag:
**08.09.2010 Patentblatt 2010/36**

(51) Int Cl.:
***F16B 21/02*** *(2006.01)*

(21) Anmeldenummer: **10002335.7**

(22) Anmeldetag: **05.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **05.03.2009 DE 102009011902**
**01.08.2009 DE 102009035831**

(71) Anmelder: **Winker Massivumformung GmbH & Co. KG**
**78549 Spaichingen (DE)**

(72) Erfinder: **Winker, Alexander, Dr.**
**79549 Spaichingen (DE)**

(74) Vertreter: **Winter, Martina**
**Patentanwältin**
**WinterLewandowsky**
**Kirchstrasse 4/6**
**71364 Winnenden (DE)**

(54) **Baueinheit**

(57) Die vorliegende Erfindung betrifft eine Baueinheit (10, 110, 210, 310) mit einem Bauteil (11, 111, 211, 311) und einem Spannelement (14, 114, 214, 314), wobei eine Klemmhülse (13, 113, 213, 313) axial an einem Ende des Bauteils (11, 111, 211, 311) ausgebildet ist, und das Spannelement (14,114, 214, 314) auf einer ringförmig umlaufenden Oberfläche mindestens zwei umlaufende Kreiskeile (16a, 16b, 16c; 116a, 116b, 116c; 216a, 216b, 216c; 316a, 316b, 316c) aufweist, die sich um gleiche Winkel über den gesamten Winkelbereich von 360° erstrecken, und die Klemmhülse (13, 113, 213, 313) auf einer ringförmig umlaufenden Oberfläche dieselbe Anzahl von Keilprofilen (17a, 17b, 17c; 117a, 117b, 117c; 217a, 217b, 217c; 317a, 317b, 317c) aufweist, die den Kreiskeilen (16a, 16b, 16c; 116a, 116b, 116c; 216a, 216b, 216c; 316a, 316b, 316c) zugeordnet sind und sich jeweils um einen gleichen Winkel erstrecken, der kleiner ist als der Winkel des zugeordneten Kreiskeils (16a, 16b, 16c; 116a, 116b, 116c; 216a, 216b, 216c; 316a, 316b, 316c).

Fig. 1

**Beschreibung**

Die vorliegende Erfindung betrifft eine Baueinheit mit einem Bauteil und einem Spannelement.

Vorrichtungen zum lösbaren Verbinden von Gegenständen sind insbesondere aus der DE 42 31 320 A1 bekannt. Diese Druckschrift offenbart eine Vorrichtung zum lösbaren Verbinden von mindestens zwei Gegenständen, mittels eines bspw. einstückigen Stiftes am ersten Gegenstand und einer Aufnahme am zweiten Gegenstand, welcher eine Keilprofilmutter sein kann. Der Stift weist in Umfangsrichtung radial übersteigende Nocken in Form von Keilprofilen auf, während die Aufnahme entsprechende Nuten in Form von Keilprofilen aufweist. Die Rückenflächen der Nocken und die Kehlflächen der Nuten folgen im Wesentlichen dem Verlauf einer logarithmischen Spirale bezüglich ihrer Achse. Zwischen Nocken und Nuten ist zum Ineinanderstecken des Stiftes in die Aufnahme ein Spalt vorgesehen.

Eine derartige Vorrichtung ist jedoch nicht beliebig verwendbar, da nicht an jedem Gegenstand ein mit Nocken versehener Stift angebracht werden kann.

Die Aufgabe der vorliegenden Erfindung besteht darin, eine Baueinheit bereit zu stellen, die mit einem beliebigen weiteren Werkstück fest, aber reversibel verbunden werden kann und die einfach und kostengünstig herstellbar ist.

Die Lösung besteht in einer Baueinheit mit den Merkmalen des Patentanspruchs 1. Die erfindungsgemäße Baueinheit zeichnet sich dadurch aus, dass eine Klemmhülse axial an einem Ende des Bauteils ausgebildet ist, und das Spannelement auf einer ringförmig umlaufenden Oberfläche mindestens zwei umlaufende Kreiskeile aufweist, die sich um gleiche Winkel über den gesamten Winkelbereich von 360° erstrecken, und die Klemmhülse auf einer ringförmig umlaufenden Oberfläche dieselbe Anzahl von Keilprofilen aufweist, die den Kreiskeilen zugeordnet sind und sich jeweils um einen gleichen Winkel erstrecken, der kleiner ist als der Winkel des zugeordneten Kreiskeils.

Diese erfindungsgemäße Ausbildung der Baueinheit bewirkt, dass das Spannelement mit Spiel auf oder in der Klemmhülse sitzt und über einen gewissen Winkelbereich, der von den Abmessungen der Kreiskeile bzw. Keilprofile im Einzelfall abhängt, frei drehbar ist. Beim Verdrehen von Spannelement und Klemmhülse wird letztere ungleichmäßig zusammen- oder auseinandergedrückt, da das Spannelement nur an den Berührungsbereichen seiner jeweiligen Kreiskeile mit den Keilprofile Kraft auf die Klemmhülse ausübt. Damit ändert sich die Querschnittsform der Klemmhülse, je nach Anzahl der Kreiskeile bzw. Keilprofile, von rund zu oval, dreieckförmig, viereckförmig, usw., so dass die Klemmhülse mit einem zu klemmenden Werkstück zumindest bereichsweise klemmend zusammenwirkt. Diese Veränderungen sind reversibel, da die Klemmhülse elastisch ist, d.h. dass die Bewegung der Klemmhülse innerhalb des Hooke'schen Bereiches stattfindet. Beim Lösen des Spannelements nimmt die Klemmhülse ihre ursprüngliche Querschnittsform wieder an.

Die von der erfindungsgemäßen Baueinheit ausgeübte Klemmwirkung widersteht auch starken Erschütterungen, da beim Verklemmen die volle mögliche Kraft angewendet werden kann und dennoch die Klemmverbindung stets reversibel ist. Ein weiterer Vorteil besteht darin, dass keinerlei Bearbeitung am zu klemmenden Werkstück notwendig ist.

Die erfindungsgemäße Baueinheit ist einfach und kostengünstig herstellbar. Die Klemmhülse kann einstückig mit dem Bauteil hergestellt werden, oder auch separat hergestellt und anschließend fest mit dem Bauteil verbunden werden. Die erfindungsgemäße Baueinheit kann unterschiedlichster Natur sein, bspw. Teil einer Teleskopstange oder eines Teleskoprohres (wie bspw. bei Staubsaugerrohren). Gleiches gilt für das zu klemmende Werkstück.

Vorteilhafte Weiterbildungen ergeben sich aus den Unteransprüchen.

Bei einer ersten Ausführungsform der erfindungsgemäßen Baueinheit ist das Bauteil mit einer mit der Klemmhülse koaxialen Innenbohrung versehen, und das Spannelement ist als Spannring ausgebildet ist, der auf die Klemmhülse aufschiebbar ist und mit Spiel auf ihr sitzt. In dieser Ausführungsform umschließt die Klemmhülse nach dem Verdrehen des Spannrings das zu klemmende Werkstück.

Bei einer zweiten Ausführungsform der erfindungsgemäßen Baueinheit ist das Spannelement als Spanndorn ausgebildet, der in die Klemmhülse einbringbar ist. In dieser Ausführungsform liegt die Klemmhülse nach dem Verdrehen des Spanndorns innerhalb des zu klemmenden Werkstücks an einer inneren Mantelfläche des Werkstücks an. In diesem Fall können das Bauteil, an welchem die Klemmhülse ausgebildet ist, und das zu klemmende Werkstück mit glatt aneinander liegenden Wänden versehen sein. Das Bauteil und das zu klemmende Werkstück können aber auch formschlüssig miteinander verbunden sein, wobei die beschriebene Klemmung als Sicherung der formschlüssigen Verbindung dient. Bspw. können die Innenwand des zu klemmenden Werkstücks und die Außenwand des Bauteils korrespondierende Gewinde aufweisen, mittels derer sie verschraubt sind.

Beide Ausführungsformen der erfindungsgemäßen Baueinheit erlauben zahlreiche weitere alternative Ausgestaltungen.

Vorzugsweise sind drei Kreiskeile und drei Keilprofile vorgesehen, so dass sich für die Klemmung drei Berührungsbereiche ergeben und die Klemmhülse des Bauteils in Form eines etwa dreieckigförmigen Querschnitts verformt wird. Dabei erstreckt sich jeder Kreiskeil des Spannelements etwa über einen Winkelbereich von 120°.

Eine weitere bevorzugte Weiterbildung sieht vor, dass sich jeder der drei Keilprofile der Klemmhülse über einen Winkelbereich von 30 bis 60°, bevorzugt 40 bis 50°, besonders bevorzugt 45° erstreckt. Damit werden eine besonders gute Wechselwirkung zwischen Kreiskeilen und Keilprofilen und eine besonders gute Klemmwirkung erzielt.

Die Steigung der Kreiskeile des Spannelements kann bspw. 1: 50 bis 1: 100, vorzugsweise 1:70, die Steigung der Keilprofile der Klemmhülse bspw. 1:20 bis 1: 40, vorzugsweise 1: 25 betragen.

Die Wanddicke der Klemmhülse entspricht vorzugsweise höchstens 10% des Innendurchmessers der Klemmhülse, so dass eine optimale Reversibilität der elastischen Verformung der Klemmhülse erzielt wird.

Eine bevorzugte Weiterbildung sieht vor, dass als zusätzliche Sicherung mindestens ein Kreiskeil und mindestens ein Keilprofil jeweils mindestens ein Mittel aufweisen, die bei mit der Klemmhülse fixiertem Spannelement miteinander in Eingriff stehen. Die Endposition des Spannelements, bei der die Mittel miteinander in Eingriff stehen, bspw. verrastet oder verriegelt sind, lässt sich manuell oder automatisch erfassen. Dies ermöglicht nicht nur eine sichere und reproduzierbare Feststellung, dass der Klemmvorgang abgeschlossen ist, sondern erlaubt es auch, die Montage der erfindungsgemäßen Baueinheit vollautomatisch vorzunehmen, da nun eine automatische Erkennung der Endposition physikalisch reproduzierbar messbar ist. Dies liegt daran, dass in dem Moment, in dem die Mittel miteinander in Eingriff kommen, eine minimalen Reduzierung der Klemmkraft erfolgt, die für die gewünschte Klemmwirkung unschädlich ist und mit Sensoren erfasst werden kann. Der Umstand, dass in der gewünschten Endposition die Mittel miteinander in Eingriff stehen, führt auch zu einer zusätzlichen Sicherung der Klemmverbindung, insbesondere bei Erschütterungen.

Die Mittel können in besonders einfacher Weise als Rastbereiche wie bspw. Rastnocken bzw. Vertiefungen ausgebildet sein. Dabei sind zwei Alternativen frei wählbar. Entweder weist der bzw. weisen die Kreiskeil(e) jeweils mindestens einen Rastbereich und das oder die Keilprofil(e) jeweils mindestens eine Vertiefung auf oder umgekehrt weist der bzw. weisen die Kreiskeil(e) jeweils mindestens eine Vertiefung und das oder die Keilprofil(e) jeweils mindestens einen Rastbereich auf.

Bei einer weiteren Ausführungsform weist eine Innenbohrung des Bauteils eine nichtzylindrische Form auf, während die Außenform eines zu klemmenden Werkstücks bzw. ein Abschnitt des Werkstücks eine zum Bauteil korrespondierende Form aufweist. Diese Maßnahme bewirkt, dass das Bauteil und das Werkstück im nicht verspannten Zustand nicht gegeneinander verdrehbar sind, so dass das Bauteil und das Werkstück beim Verspannen mittels des Spannrings nicht gegen ein gegenseitiges Verdrehen festgehalten werden müssen.

Ausführungsbeispiele der vorliegenden Erfindung werden im Folgenden anhand der beigefügten Zeichnungen näher erläutert. Es zeigen in einer schematischen, nicht maßstabsgetreuen Darstellung:

Figur 1    ein erstes Ausführungsbeispiel einer erfindungsgemäßen Baueinheit mit einem ge- klemmten Werkstück in einer Draufsicht, teilweise im Schnitt;

Figur 2    einen Schnitt entlang der Linie II - II in Figur 1;

Figur 3    ein weiteres Ausführungsbeispiel einer erfindungsgemäßen Baueinheit mit einem geklemmten Werkstück in einer Draufsicht, teilweise im Schnitt;

Figur 4    einen Schnitt entlang der Linie IV - IV in Figur 3;

Figur 5    ein weiteres Ausführungsbeispiel einer erfindungsgemäßen Baueinheit mit einem nicht geklemmten Werkstück in einer Draufsicht, teilweise im Schnitt;

Figur 6    einen Schnitt entlang der Linie VI - VI in Figur 5;

Figur 7    die Baueinheit gemäß Figur 5 mit einem geklemmten Werkstück in einer Drauf- sicht, teilweise im Schnitt;

Figur 8    einen Schnitt entlang der Linie VIII - VIII in Figur 7;

Figur 9    ein weiteres Ausführungsbeispiel einer erfindungsgemäßen Baueinheit mit einem geklemmten Werkstück in einer Draufsicht, teilweise im Schnitt;

Figur10    einen Schnitt entlang der Linie X - X in Figur 9.

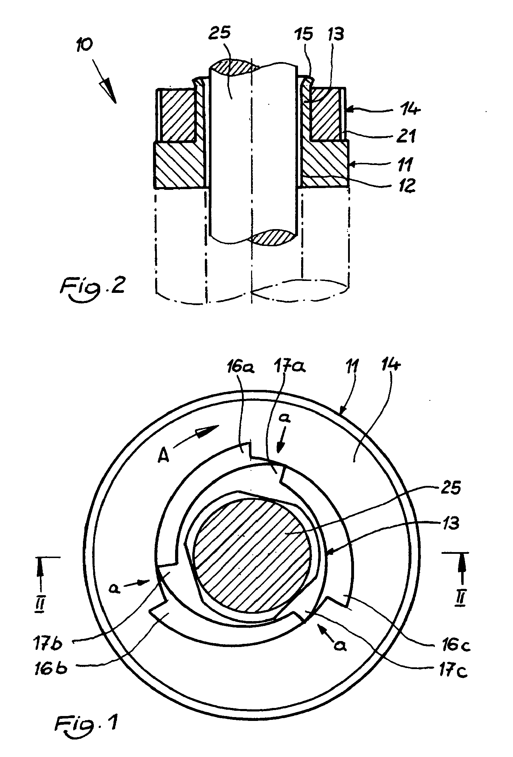

Ein erstes Ausführungsbeispiel einer erfindungsgemäßen Baueinheit 10 ist in den Figuren 1 und 2 dargestellt. Die Baueinheit 10 setzt sich zusammen aus einem Bauteil 11 und einem Spannelement 14 in Form eines Spannrings.

Das Bauteil 11 ist im Ausführungsbeispiel ringförmig ausgebildet, kann aber je nach Verwendungszweck jede beliebige Form aufweisen. In Figur 1 ist als Beispiel hierfür eine rohrförmige Ausbildung strichpunktiert angedeutet. Das Bauteil 11 weist eine zylindrische Innenbohrung 12 auf und ist an einem seiner axialen Enden mit einer Klemmhülse 13 versehen, durch die sich die zylindrische Innenbohrung 12 erstreckt. Auf die Klemmhülse 13 ist ein Spannring 14 aufgeschoben. Die Klemmhülse 13 ist im Ausführungsbeispiel mit einem Kragen 15 versehen, der verhindert, dass der Spannring 14 in nicht geklemmten Zustand von der Klemmhülse 13 gleitet. Das Bauteil 11 und der Spannring 14 können, je nach Verwendungszweck, eine beliebige Außenkontur aufweisen, bspw. kreisförmig, quadratisch oder sechskantförmig und/oder auf ihrer Mantelfläche mit einer Rändelung 21 versehen sein. Alle Teile sind bevorzugt aus Metall, jedoch ist auch die Verwendung von Kunststoffen denkbar.

Der Spannring 14 ist entlang seiner Innenfläche mit drei Ausnehmungen in Form von Kreiskeile 16a, 16b, 16c versehen. Jeder Kreiskeil erstreckt sich im Ausführungsbeispiel über einen Winkelbereich von 120°. Die Steigung der Kreiskeile 16a, 16b, 16c ist vergleichsweise gering, so dass sie praktisch als linear bezeichnet werden kann. Im Ausführungsbeispiel beträgt die Steigung 1: 70 oder 3/10 mm bei einem Innendurchmesser d von 19,2 mm. Die Bemessung des Innendurchmessers und der Steigung der Kreiskeile hängt im Einzelfall von den Abmessungen des Spannrings 14, der Klemmhülse 13 und des zu klemmenden Werkstücks 25 ab. Es sollten mindestens zwei Kreiskeile vorgesehen sein.

Eine lineare Steigung der Kreiskeile 16a, 16b, 16c wäre der Idealfall, eine derartige Kontur der Kreiskeile ist jedoch schwer herstellbar. Praktisch kann die Kontur der Kreiskeile durch einen Kreisbogen beschrieben werden, dessen Mittelpunkt gegenüber dem Mittelpunkt des Bauteils 11 verschoben ist. Die Berechnung dieses Kreisbogens kann mit den folgenden Formeln (I), (II), (III) vorgenommen werden:

$$\text{(I)} \qquad X_A = 0,5 \times g$$

$$\text{(II)} \qquad Y_A = (2/\sqrt{3} - \sqrt{3}/2) \times g$$

$$\text{(II)} \qquad R_A = R_0 + X_A$$

mit $R_0$ = Nennradius, g = Steigung

Mit g = 0,3 und $R_0$ = 9,6 für den Innenradius des Spannrings 14 bzw. $R_0$ = 9,5 für den Außenradius der Klemmhülse 13 erhält man $X_A$ = 0,15, $Y_A$ = 0,0866 und $R_A$ = 9,75.

Die Außenfläche der Klemmhülse 13 des Bauteils 11 weist dieselbe Anzahl von Keilprofilen auf wie der Spannring 14 Kreiskeile zählt, im Ausführungsbeispiel also drei Keilprofile 17a, 17b, 17c. Anders als beim Spannring 14 erstrecken sich die Keilprofile 17a, 17b, 17c der Klemmhülse 13 über einen kleineren Winkelbereich, im Ausführungsbeispiel 45°. Der Winkelbereich kann 30 bis 60° betragen. Die Steigung der Keilprofile 17a, 17b, 17c hängt ebenfalls von den Abmessungen des Spannrings 14, der Klemmhülse 13 und des zu klemmenden Werkstücks 25 ab und kann durch einen Kreisbogen beschrieben werden, dessen Mittelpunkt gegenüber dem Mittelpunkt des Bauteils 11 verschoben ist. Die Berechnung des Kreisbogens kann mit den folgenden Formeln (IV), (V), (VI) vorgenommen werden:

$$\text{(IV)} \qquad X_I = -(\sqrt{2} + 1) \times g$$

$$\text{(V)} \qquad Y_I = (\sqrt{2} + 1) \times g$$

$$\text{(VI)} \qquad R_I = R_0 + X_I$$

mit $R_0$ = Nennradius, g = Steigung

Mit g = 0,3 und $R_0$ = 9,6 für den Innenradius des Spannrings 14 bzw. $R_0$ = 9,5 für den Außenradius der Klemmhülse 13 erhält man $X_I$ = - 0,7243 , $Y_I$ = 0,7243 und $R_I$ = 8,7757.

Der Außendurchmesser der Klemmhülse 13 ist also vorzugsweise etwas geringer als der Innendurchmesser des Spannrings 14, so dass die Differenz einen gewissen Spielraum zum Fügen der Teile liefert; im Ausführungsbeispiel beträgt der Außendurchmesser der Klemmhülse 13 19 mm. Im Ausführungsbeispiel, mit einem Innendurchmesser von 17 mm und einem Außendurchmesser von 19 mm, beträgt die maximale Höhe der Keilprofile 17a, 17b, 17c 0,3 mm bei einem Weg über etwa 7,5 mm. Dabei ist es von Vorteil, wenn die Wanddicke der Klemmhülse 13 höchstens 1/10 des Innendurchmessers beträgt. Diese geringe Wanddicke erlaubt eine optimale elastische Verformung der Klemmhülse 13.

Der Spannring 14 ist so auf die Klemmhülse 13 geschoben, dass die erhabenen Keilprofile 17a, 17b, 17c der Klemmhülse 13 mit den hohlen Kreiskeilen 16a, 16b, 16c des Spannrings 14 zur Deckung kommen. Der Spannring 14 sitzt, auch aufgrund der Differenz zwischen Außendurchmesser der Klemmhülse 13 und Innendurchmesser des Spannrings 14, mit einem gewissen Fügespiel auf der Klemmhülse 13 und kann in Richtung des Pfeils A in Figur 2 frei gedreht werden, und zwar so weit, bis nach dem Ausgleich des Fügespiels die Keilprofile 17a, 17b, 17c der Klemmhülse 13 an den Kehlflächen der Kreiskeile 16a, 16b, 16c des Spannringes 14 anliegen. Beispielsweise erfolgt bei einem Fügespiel von 0,1 mm und einer Steigung der Kreiskeile bzw. Keilprofile von 0,3 mm auf 120° die Anlage nach einer Drehung um 40° (dieser Bewegungsablauf ist nicht dargestellt).

Erst dann setzt mit der weiteren Drehung des Spannrings 14 der eigentliche Klemmeffekt ein. Das Resultat ist in Figur 1 schematisch dargestellt. Die vom Spannring 14 ausgeübte Klemmwirkung beschränkt sich auf die durch die Pfeile a angedeuteten Bereiche. Die Klemmwirkung auf die Klemmhülse 13 hat zur Folge, dass diese in den durch die Pfeile a angedeuteten Bereichen leicht zusammengedrückt wird und die ehemals kreisrunde Kontur des Innendurchmessers etwa dreieckförmig wird. Damit wird die Klemmhülse 13 in den abgeflachten Bereichen an das zu klemmende Werkstück 25 gepresst, welches vorab in das Bauteil 11 geschoben wurde. Auf diese Weise wird die Klemmhülse 13 mit dem Werkstück 25 verklemmt und dieses gegen Lockerung oder Verlust gesichert. Diese Verklemmung kann wieder rückgängig gemacht werden, indem der Spannring 14 entgegen der Richtung des Pfeils A in Figur 2 gedreht wird. Die elastische Klemmhülse 13 nimmt dann wieder ihre kreisförmige Kontur an.

Die Kontur der Keilprofile 17a, 17b, 17c der Klemmhülse 13 ist im Ausführungsbeispiel vor dem Anziehen etwa kreisbogenförmig, weil die Konturen durch einen Kreisbogen nach den Formeln (IV), (V), (VI) beschrieben werden können. Diese Kontur ist so berechnet, dass sich nach der Verformung, d.h. nach dem Anziehen des Spannrings 14 und der Verklemmung, eine annähernd lineare Form einstellt, um eine möglichst gleichmäßige, breitere, nicht linienförmige Anlage am im Wesentlichen linearen Profil der Kreiskeile 16a, 16b, 16c des Spannrings 14 zu erhalten. Dadurch werden Spannungsspitzen vermieden. Dabei bleibt die Kontur der Kreiskeile 16a, 16b, 16c des Spannrings 14 aufgrund der im Ausführungsbeispiel größeren Wanddicke des Spannrings 14 im Wesentlichen unverändert.

Der Klemmbereich zwischen dem Kreiskeil 16a des Spannrings 14 und dem Keilprofil 17a der Klemmhülse 13 verläuft in einem Winkelbereich etwa zwischen 25 und 50°. In diesem Bereich, in welchem die Klemmhülse 13 nach innen abgeflacht ist, findet auch die Klemmung zwischen der Klemmhülse 13 und dem Werkstück 25 statt.

Aus dem oben Beschriebenen geht hervor, dass die Klemmung des erfindungsgemäßen Bauteils 11 auf der bereichsweise elastischen, unrunden Verformung der Klemmhülse 13 beruht, die von der kreisrunden Kontur abweicht. Daher ist es nicht zwingend, genau drei Kreiskeile bzw. Keilprofile am Spannring 14 bzw. an der Klemmhülse 13 vorzusehen. Auch mit zwei, vier oder fünf Kreiskeilen bzw. Keilprofilen erhält man noch eine dementsprechende Verformung der Klemmhülse 13. Die Obergrenze liegt dort, wo wegen der zu großen Anzahl der Kreiskeile bzw. Keilprofile keine deutlich unrunde Verformung mehr erhalten wird.

Das erfindungsgemäße Bauteil 11 und der Spannring 14 können einfach und kostengünstig hergestellt werden. Der Spannring 14 kann bspw. in einem Arbeitsgang durch Pressen hergestellt werden. Das Bauteil 11 kann mit der Klemmhülse 13 einstückig hergestellt werden, die Klemmhülse 13 kann aber auch separat hergestellt und mit dem Bauteil 13 fest verbunden werden. Die Wanddicke der Klemmhülse 13 kann bei der Herstellung oder nachträglich eingestellt werden. Anschließend wird der Spannring 14 auf die Klemmhülse 13 geschoben, wobei der freie Rand der Klemmhülse 13 leicht nach außen zu einem Kragen 15 gebogen werden kann, um den Spannring 14 verliersicher auf der Klemmhülse 13 zu halten.

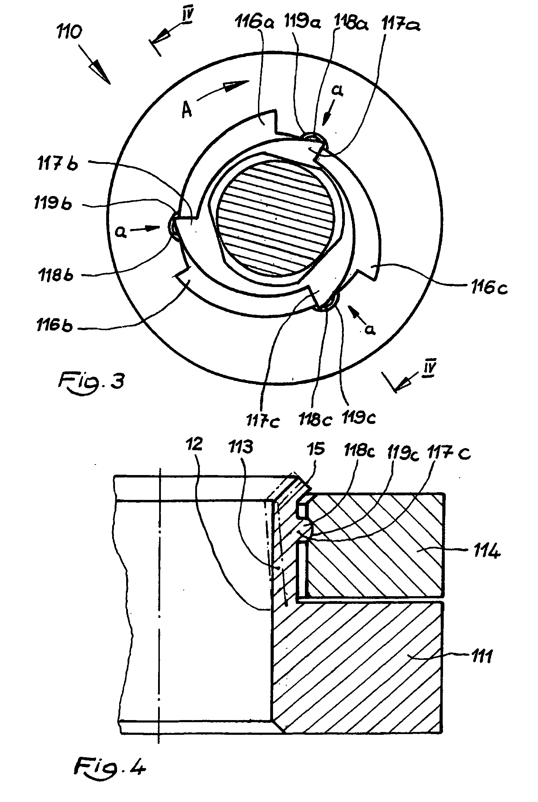

Die Figuren 3 und 4 zeigen in einer den Figuren 1 und 2 vergleichbaren Darstellung ein weiteres Ausführungsbeispiel einer erfindungsgemäßen Baueinheit 110 mit einem erfindungsgemäßen Bauteil 111. Übereinstimmende Strukturen sind daher mit den gleichen Bezugszeichen versehen. Der einzige Unterschied zu dem in den Figuren 1 und 2 dargestellten Ausführungsbeispiel besteht darin, dass bei jedem der am Spannring 114 vorgesehenen Kreiskeile 116a, 116b, 116c im Ausführungsbeispiel eine Vertiefung 118a, 118b, 118c aufweist und dass jedes an der Klemmhülse 113 ausgebildete Keilprofil 117a, 117b, 117c im Ausführungsbeispiel einen Rastbereich 119a, 119b, 119c in Form einer Rastnocke aufweist. Eine umgekehrte Anordnung ist ebenfalls denkbar, bei der die am Spannring vorgesehenen Kreiskeile jeweils eine Rastnocke und die an der Klemmhülse ausgebildeten Keilprofile jeweils eine Vertiefung aufweisen (nicht dargestellt). Selbstverständlich kann die Zahl der Rastnocken und Vertiefungen frei gewählt werden. Wenn bspw. jeder Rastnocke zwei oder mehrere Vertiefungen zugeordnet sind, können mehrere Rastpositionen eingestellt werden, die unterschiedlichen Klemmkräften zugeordnet sind. Damit erhält das erfindungsgemäße Bauteil 111 bzw. die erfindungsgemäße Baueinheit 110 eine größere Variabilität und kann vielfältiger eingesetzt und besser an die Anforderungen des Einzelfalls angepasst werden.

Die Vertiefungen 119a, 119b, 119c und die Rastnocken118a, 118b 118c stellen Mittel dar, die bei auf der Klemmhülse 113 fixiertem Spannring 114 miteinander in Eingriff stehen, so dass eine Verrastung gebildet wird. Selbstverständlich können die Mittel auch so ausgestaltet sein, dass andere Formen der Eingriffswirkung erzielt werden wie bspw. eine Verriegelung. In dem Moment, in dem die Mittel miteinander in Eingriff kommen und die Endposition des Spannrings 114 relativ zur Klemmhülse 113 erreicht ist, erfolgt eine minimale Reduzierung der Klemmkraft, die für die gewünschte Klemmwirkung unschädlich ist. Dies gilt insbesondere dann, wenn mittels der Abmessungen der Kreiskeile 116a, 116b, 116c und Keilprofile 117a, 117b, 117c unmittelbar vor der Verrastung eine geringfügige Überhöhung der Klemmkraft bewirkt wird. Ferner wird eine zusätzliche Sicherung der Klemmverbindung erreicht, indem neben dem Reibschluss zwischen den Kreiskeilen 116a, 116b, 116c und den Keilprofilen 117a, 117b, 117c noch ein gewisser Formschluss gebildet wird. Dabei kann die Dimensionierung der Rastnocken und Vertiefungen den Erfordernissen des Einzelfalls angepasst werden.

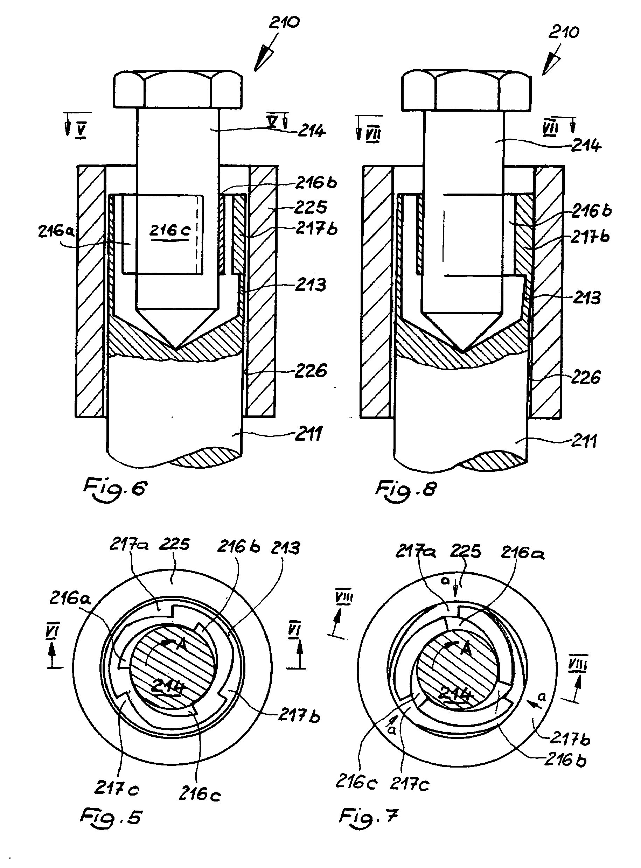

Ein weiteres Ausführungsbeispiel einer erfindungsgemäßen Baueinheit 210 mit einem erfindungsgemäßen Bauteil 211 ist in den Figuren 5 bis 8 dargestellt, und zwar in den Figuren 5 und 6 in nicht geklemmtem Zustand und in den Figuren 7 und 8 in geklemmtem Zustand. Die Baueinheit 210 setzt sich zusammen aus dem Bauteil 211 und einem Spannelement in Form eines Spanndorns 214. Ferner ist ein zu klemmendes Werkstück 225 dargestellt. Das Bauteil 211 und das zu klemmende Werkstück 225 sind im Ausführungsbeispiel mit glatten Wänden versehen. Sie können aber auch formschlüssig miteinander verbunden sein, wobei die beschriebene Klemmung als Sicherung der formschlüssigen Verbindung dient. Bspw. können die Innenwand des zu klemmenden Werkstücks 225 und die Außenwand des Bauteils 211 korrespondierende Gewinde aufweisen, mittels derer sie verschraubt sind.

Das Bauteil 211 ist im Ausführungsbeispiel zylinderförmig ausgebildet, kann aber je nach Verwendungszweck jede beliebige Form aufweisen. Das Bauteil 211 ist an einem seiner axialen Enden mit einer Klemmhülse 213 versehen, welche den Spanndorn 214 aufnimmt. Alle Teile sind bevorzugt aus Metall, jedoch ist auch die Verwendung von Kunststoffen denkbar.

Der Spanndorn 214 ist entlang seiner Mantelfläche mit drei Erhöhungen in Form von Kreiskeilen 216a, 216b, 216c versehen. Jeder Kreiskeil erstreckt sich im Ausführungsbeispiel über einen Winkelbereich von 120°. Die Steigung der Kreiskeile 216a, 216b, 216c ist vergleichsweise gering. Die Bemessung des Außendurchmessers des Spanndorns 214 und der Steigung der Kreiskeile hängt im Einzelfall von den Abmessungen des Spanndorns 214, der Klemmhülse 213 und des zu klemmenden Werkstücks 225 ab. Es sollten mindestens zwei Kreiskeile vorgesehen sein. Praktisch kann die Kontur der Kreiskeile durch einen Kreisbogen beschrieben werden, dessen Mittelpunkt gegenüber dem Mittelpunkt des Bauteils 211 bzw. des Spanndorns 214 verschoben ist.

Die Innenfläche der Klemmhülse 213 des Bauteils 211 weist dieselbe Anzahl von Keilprofilen auf wie der Spannring 214 Kreiskeile zählt, im Ausführungsbeispiel also drei Keilprofile 217a, 217b, 217c. Anders als beim Spanndorn 214 erstrecken sich die Keilprofile 217a, 217b, 217c der Klemmhülse 213 über einen kleineren Winkelbereich, im Ausführungsbeispiel 45°. Der Winkelbereich kann 30 bis 60° betragen. Die Steigung der Keilprofile 217a, 217b, 217c hängt ebenfalls von den Abmessungen des Spanndorns 214, der Klemmhülse 213 und des zu klemmenden Werkstücks 225 ab und kann durch einen Kreisbogen beschrieben werden, dessen Mittelpunkt gegenüber dem Mittelpunkt des Bauteils 211 bzw. der Klemmhülse 213 verschoben ist.

Der Innendurchmesser der Klemmhülse 213 ist also vorzugsweise etwas größer als der Außendurchmesser des Spanndorns 214, so dass die Differenz einen gewissen Spielraum zum Fügen der Teile liefert. Dabei ist es von Vorteil, wenn die Wanddicke der Klemmhülse 213 höchstens 1/10 ihres Innendurchmessers beträgt. Diese geringe Wanddicke erlaubt eine optimale elastische Verformung der Klemmhülse 213.

Der Spanndorn 214 ist so in der Klemmhülse 213 aufgenommen, dass die Keilprofile 217a, 217b, 217c der Klemmhülse 213 mit den Kreiskeilen 216a, 216b, 216c des Spannrings 214 zur Deckung kommen (vgl. Figuren 5 und 6). Der Spanndorn 214 sitzt, auch aufgrund der Differenz zwischen Innendurchmesser der Klemmhülse 213 und Außendurchmesser des Spanndorns 214 mit einem gewissen Fügespiel in der Klemmhülse 213 und kann in Richtung des Pfeils A in Figur 7 frei gedreht werden, und zwar so weit, bis nach dem Ausgleich des Fügespiels die Kreiskeile 216a, 216b, 216c des Spanndornes 214 an den Keilprofilen 217a, 217b, 217c der Klemmhülse 213 anliegen.

Erst dann setzt mit der weiteren Drehung des Spanndorns 214 der eigentliche Klemmeffekt ein. Das Resultat ist in den Figuren 7 und 8 schematisch dargestellt. Die vom Spanndorn 214 ausgeübte Klemmwirkung beschränkt sich auf die Anlagebereiche von Kreiskeilen 216a, 216b, 216c und Keilprofilen 217a, 217b, 217c. Die Klemmwirkung auf die Klemmhülse 213 hat zur Folge, dass diese in den Anlagebereichen leicht auseinander gedrückt wird und die ehemals kreisrunde Kontur des Außendurchmessers etwa dreieckförmig wird. Damit wird die Klemmhülse 213 an eine innere Mantelfläche 226 des zu klemmenden Werkstücks 225 gepresst, welches vorab auf das Bauteil 211 geschoben wurde. Auf diese Weise wird die Klemmhülse 213 mit dem Bauteil 225 verklemmt und dieses gegen Lockerung oder Verlust gesichert. Diese Verklemmung kann wieder rückgängig gemacht werden, indem der Spanndorn 214 entgegen der Richtung des Pfeils A in Figur 7 gedreht wird. Die elastische Klemmhülse 213 nimmt dann wieder ihre kreisförmige Kontur an.

Aus dem oben Beschriebenen geht hervor, dass die Klemmung des erfindungsgemäßen Bauteils 211 auf der bereichsweise elastischen, unrunden Verformung der Klemmhülse 213 beruht, die von der kreisrunden Kontur abweicht. Daher ist es nicht zwingend, genau drei Kreiskeile bzw. Keilprofile am Spanndorn 214 bzw. an der Klemmhülse 213 vorzusehen. Auch mit zwei, vier oder fünf Kreiskeilen bzw. Keilprofilen erhält man noch eine dementsprechende Verformung der Klemmhülse 213. Die Obergrenze liegt dort, wo wegen der zu großen Anzahl der Kreiskeile bzw. Keilprofile keine deutlich unrunde Verformung mehr erhalten wird.

Das erfindungsgemäße Bauteil 111, 211 und das Spannelement 114, 214 können einfach und kostengünstig hergestellt werden. Das Spannelement 114, 214 kann bspw. in einem Arbeitsgang durch Pressen hergestellt werden. Das Bauteil 111, 211 kann mit der Klemmhülse 113, 213 einstückig hergestellt werden, die Klemmhülse 113, 213 kann aber auch separat hergestellt und mit dem Bauteil 111, 211 fest verbunden werden. Die Wanddicke der Klemmhülse 113, 213 kann bei der Herstellung oder nachträglich eingestellt werden.

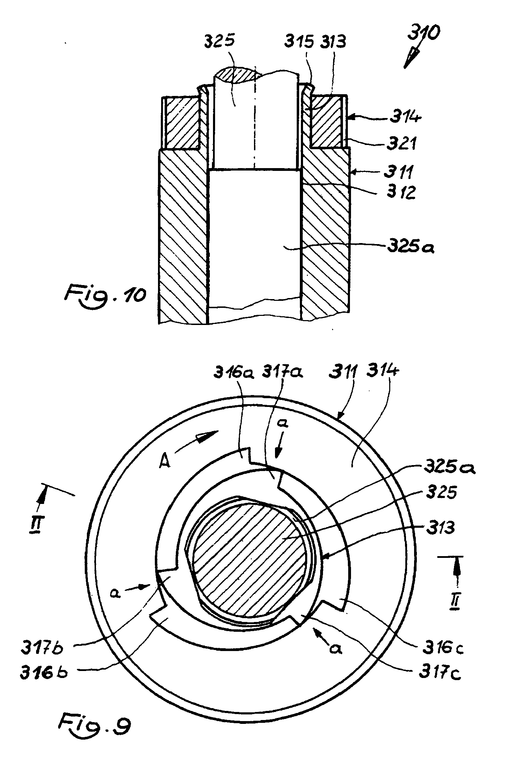

Ein weiteres Ausführungsbeispiel einer erfindungsgemäßen Baueinheit 310 ist in den Figuren 9 und 10 dargestellt. Die Baueinheit 310 setzt sich zusammen aus einem Bauteil 311 und einem Spannelement 314 in Form eines Spannrings und entspricht im Wesentlichen dem Ausführungsbeispiel gemäß den Figuren 1 und 2, so dass ergänzend auf die Beschreibung hierzu verwiesen wird.

In den Figuren 9 und 10 ist das Bauteil 311 rohrförmig ausgebildet, kann aber je nach Verwendungszweck jede beliebige Form aufweisen. Das Bauteil 311 weist eine zumindest teilweise nichtzylindrische Innenbohrung 312 auf und ist an einem seiner axialen Enden mit einer Klemmhülse 313 versehen, durch die sich die nichtzylindrische Innenbohrung 312 erstreckt. Auf die Klemmhülse 313 ist ein Spannring 314 aufgeschoben. Die Klemmhülse 313 ist im Ausführungsbeispiel mit einem Kragen 315 versehen, der verhindert, dass der Spannring 314 in nicht geklemmten Zustand von der Klemmhülse 313 gleitet. Das Bauteil 311 und der Spannring 314 können, je nach Verwendungszweck, eine beliebige Außenkontur aufweisen, bspw. kreisförmig, quadratisch oder sechskantförmig und/oder auf ihrer Mantelfläche mit einer Rändelung 321 versehen sein. Alle Teile sind bevorzugt aus Metall, jedoch ist auch die Verwendung von Kunststoffen denkbar.

Der Spannring 314 ist, wie im Ausführungsbeispiel gemäß den Figuren 1 und 2, entlang seiner Innenfläche mit drei Ausnehmungen in Form von Kreiskeilen 316a, 316b, 316c versehen, während die Außenfläche der Klemmhülse 313 des Bauteils 311 dieselbe Anzahl von Keilprofilen aufweist wie der Spannring 314 Kreiskeile zählt, im Ausführungsbeispiel also drei Keilprofile 317a, 317b, 317c. Die Anordnung und die Abmessungen sowie die Funktion der Kreiskeile 316a, 316b, 316c und Keilprofile 317a, 317b, 317c entsprechen dem Ausführungsbeispiel gemäß der Figuren 1 und 2, so dass diesbezüglich auf die zugehörige Figurenbeschreibung verwiesen wird.

Die Funktion der Baueinheit 310 gemäß den Figuren 9 und 10 entspricht ebenfalls im Wesentlichen derjenigen der Baueinheit 10 gemäß den Figuren 1 und 2, so dass auf die obige Beschreibung verwiesen wird. Der wesentliche Unterschied besteht darin, dass das zu klemmende Werkstück 325 eine Außenform 325a aufweist, die korrespondierend zur zumindest teilweise nichtzylindrischen Innenbohrung 312 des Bauteils 311 ebenfalls teilweise nichtzylindrisch ausgebildet ist. Infolge dieser Maßnahme müssen das Bauteil 311 und das Werkstück 325 beim Verspannen mittels des Spannrings 314 nicht gegen ein gegenseitiges Verdrehen festgehalten werden. Das Bauteil 311 und das Werkstück 325 sind jedoch in axialer Richtung gegeneinander frei bewegbar.

Die vorliegende Erfindung stellt also eine einfach und kostengünstig herstellbare Vorrichtung zur Verbindung von Gegenständen zur Verfügung, die mit maximaler Kraft verklemmt werden kann und damit besonders gut gegen Lockern und Verlust gesichert ist.

**Patentansprüche**

1. Baueinheit (10, 110, 210, 310) mit einem Bauteil (11, 111, 211, 311) und einem Spannelement (14, 114, 214, 314), wobei eine Klemmhülse (13, 113, 213, 313) axial an einem Ende des Bauteils (11, 111, 211, 311) ausgebildet ist, und das Spannelement (14,114, 214, 314) auf einer ringförmig umlaufenden Oberfläche mindestens zwei umlaufende Kreiskeile (1 6a, 16b, 16c; 116a, 116b, 116c; 216a, 216b, 216c; 316a, 316b, 316c) aufweist, die sich um gleiche Winkel über den gesamten Winkelbereich von 360° erstrecken, und die Klemmhülse (13, 113, 213, 313) auf einer ringförmig umlaufenden Oberfläche dieselbe Anzahl von Keilprofilen (17a, 17b, 17c; 117a, 117b, 117c; 217a, 217b, 217c; 317a, 317b, 317c) aufweist, die den Kreiskeilen (1 6a, 16b, 16c; 116a, 116b, 116c; 216a, 216b, 216c; 316a, 316b, 316c) zugeordnet sind und sich jeweils um einen gleichen Winkel erstrecken, der kleiner ist als der Winkel des zugeordneten Kreiskeils (16a, 16b, 16c; 116a, 116b, 116c; 216a, 216b, 216c; 316a, 316b, 316c).

2. Baueinheit nach Anspruch 1, **dadurch gekennzeichnet, dass** das Bauteil (11, 111, 311) mit einer mit der Klemmhülse (13, 113, 313) koaxialen Innenbohrung (12) versehen und das Spannelement als Spannring (14, 114, 314) ausgebildet ist, der auf die Klemmhülse (13, 113, 313) aufschiebbar ist.

3. Baueinheit nach Anspruch 1, **dadurch gekennzeichnet, dass** das Spannelement als Spanndorn (214) ausgebildet ist, der in die Klemmhülse (213) einbringbar ist.

4. Baueinheit nach einem der vorhergehenden Ansprüche, **dadurch gekennzeichnet, dass** drei Kreiskeile (16a, 16b, 16c; 116a, 116b, 116c; 216a, 216b, 216c; 316a, 316b, 316c) und drei Keilprofile (17a, 17b, 17c; 117a, 117b, 117c;

217a, 217b, 217c; 317a, 317b, 317c) vorgesehen sind.

5. Baueinheit nach Anspruch 4, **dadurch gekennzeichnet, dass** sich jedes Keilprofil (17a, 17b, 17c; 117a, 117b, 117c; 217a, 217b, 217c; 317a, 317b, 317c) der Klemmhülse (13, 113, 213, 313) über einen Winkelbereich von 30 bis 60°, bevorzugt 40 bis 50°, besonders bevorzugt 45° erstreckt.

6. Baueinheit nach einem der vorhergehenden Ansprüche, **dadurch gekennzeichnet, dass** die Steigung der Kreiskeile (1 6a, 16b, 16c; 116a, 116b, 116c; 216a, 216b, 216c; 316a, 316b, 316c) 1: 50 bis 1: 100, vorzugsweise 1:70 beträgt.

7. Baueinheit nach einem der vorhergehenden Ansprüche, **dadurch gekennzeichnet, dass** die Steigung der Keilprofile (17a, 17b, 17c; 117a, 117b, 117c; 217a, 217b, 217c; 317a, 317b, 317c) 1:20 bis 1: 40, vorzugsweise 1: 25 beträgt.

8. Baueinheit nach einem der vorhergehenden Ansprüche, **dadurch gekennzeichnet, dass** die Wanddicke der Klemmhülse (13, 113, 213, 313) höchstens 10% des Innendurchmessers der Klemmhülse (13, 113, 213, 313) entspricht.

9. Baueinheit nach einem der vorhergehenden Ansprüche, **dadurch gekennzeichnet, dass** mindestens ein Kreiskeil (116a, 116b, 116c) und mindestens ein Keilprofil (117a, 117b, 117c) jeweils mindestens ein Mittel (118a, 118b, 118c; 119a, 119b, 119c) aufweisen, die bei mit der Klemmhülse (113) fixiertem Spannelement (114) miteinander in Eingriff stehen.

10. Baueinheit nach Anspruch 9, **dadurch gekennzeichnet, dass** die Mittel als Rastbereiche (118a, 118b, 118c) bzw. Vertiefungen (119a, 119b, 119c) ausgebildet sind.

11. Baueinheit nach einem der vorhergehenden Ansprüche, **dadurch gekennzeichnet, dass** eine Innenbohrung (312) des Bauteils (311) eine nichtzylindrische Form aufweist und dass die Außenform eines zu klemmenden Werkstücks (325) bzw. ein Abschnitt (325a) des Werkstücks (325) eine zum Bauteil (311) korrespondierende Form aufweist, derart, dass das Bauteil (311) und das Werkstück (325) im nicht verspannten Zustand nicht gegeneinander verdrehbar sind.

12. Baueinheit nach einem der vorhergehenden Ansprüche, mit einem zu klemmenden Werkstück (25, 225, 325), wobei das Spannelement (14, 114, 214, 314) mit der Klemmhülse (13, 113, 213, 313) durch Klemmung in Eingriff steht und die Klemmhülse (13, 113, 213, 313) eine unrunde Querschnittskontur aufweist und an dem zu klemmenden Werkstück (25, 225, 325) zumindest über einen Teil einer ihrer Flächen anliegt und dieses klemmend hält.

Fig.2

Fig.1

110

116a 119a 118a 117a

A

117b
119b
118b
116b

116c

117c 118c 119c

Fig. 3

12 113 15 118c 119c 117 c

114

111

Fig. 4

Fig.6

Fig.8

Fig.5

Fig.7

Fig. 10

Fig. 9

Europäisches
Patentamt

European
Patent Office

Office européen
des brevets

**EUROPÄISCHER RECHERCHENBERICHT**

**Nummer der Anmeldung**

EP 10 00 2335

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 032629 A1 (DAIMLER CHRYSLER AG [DE]; METALLWARENFABRIK HERMANN WINK [DE]) 31. Januar 2008 (2008-01-31) | 1,2,4-10 | INV. F16B21/02 |
| Y | * das ganze Dokument * ----- | 3,12 | |
| Y | DE 102 13 214 A1 (ZINSER PAUL [DE]) 16. Oktober 2003 (2003-10-16) * Absätze [0035] - [0037] * ----- | 3 | |
| Y | US 4 408 936 A (WILLIAMSON HERMAN L [US]) 11. Oktober 1983 (1983-10-11) | 12 | |
| A | * Spalte 3, Zeilen 13-22 * ----- | 11 | |

**RECHERCHIERTE SACHGEBIETE (IPC)**

F16B

Der vorliegende Recherchenbericht wurde für alle Patentansprüche erstellt

| Recherchenort | Abschlußdatum der Recherche | Prüfer |
|---|---|---|
| München | 23. Juni 2010 | Rochus, Johann |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 10 00 2335

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2010

| Im Recherchenbericht angeführtes Patentdokument | Datum der Veröffentlichung | Mitglied(er) der Patentfamilie | Datum der Veröffentlichung |
|---|---|---|---|
| DE 102007032629 A1 | 31-01-2008 | EP 2044341 A1 | 08-04-2009 |
| DE 10213214 A1 | 16-10-2003 | KEINE | |
| US 4408936 A | 11-10-1983 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4231320 A1